# EUROPEAN PATENT APPLICATION

(11) **EP 4 785 792 A1**
(43) Date of publication of application: **05.08.2026**
(21) Application number: 25154747.7
(22) Date of filing: 29.01.2025
(51) Int. Cl.: A01N 25/04, A01N 43/16, A01N 65/22, A01N 65/24, A01N 65/44, A01P 3/00, C09D 5/14

(54) **FUNGAL CHITOSAN-BASED ANTIMICROBIAL COATING COMPOSITION FOR COATING AND MARKING OF FOODSTUFF AND FOOD-CONTAINING CASINGS**

(71) Applicant: Van Hees GmbH, 65396 Walluf (DE)
(72) Inventor: Kempkes, Martin, 41334 Nettetal (DE); Nozica, Mauricio, 65185 Wiesbaden (DE)
(74) Representative: dompatent

(57) **Abstract**

The present invention relates to an antimicrobial coating composition composed of a fungal chitosan component and a crosslinker component having one or more aromatic aldehydes, its preparation and use for coating and/or marking foodstuff, food-containing casings including the skin of raw sausages, and food packaging.

## Description

The present invention relates to an antimicrobial coating composition composed of a fungal chitosan component and a crosslinker component having one or more aromatic aldehydes, its preparation and use for coating and/or marking foodstuff, food-containing casings including the skin of raw sausages, and food packaging.

### Background

The occurrence of visually recognizable mold and yeast growth is a widespread problem during the fermentation and maturing of firm raw sausages. Many producers therefore resort to measures to prevent this spoilage, which are either costly (such as washing the surface with vinegar water, spraying with mold-inhibiting agents) or uncertain in terms of their declaration (such as the use of natamycin). Processes such as horizontal maturing of raw sausages or processes designed to reduce weight loss make it more difficult to prevent mold and yeast growth.

Yeast growth generally occurs at the beginning of the ripening process. As soon as further drying and reduction of the a_{w}-value has taken place, molds are the main cause of spoilage. In the case of semi-durable products (such as cabanossi), mold spoilage can occur, in particular when the packaging is damaged ("air draught").

A spectrum of yeasts and molds was identified that is suitable as indicator germs for the selection and composition of the active substances and is representative of the spoilage of this product group. With regard to the occurrence of mold species on meat products such as raw sausages, a relatively large number of scientific publications are available. In general, various Penicillium species have been detected, which are accompanied by species such as *Scopulariopsis, Aspergillus* or *Eurotium.* The following Penicillium species were isolated: *P. brevicompactum, P. chrysogenum, P. citrinum, P. crustosum, P. cyclopium, P. commune, P. expansum, P. nalgiovense, P. roqueforti, P. solitum, P. verrucosum* and *P. viridicatum.* The species *P. nalgiovense, P. solitum and P. commune* are considered to be dominant. The frequent occurrence of these different Penicillium species on meat products is probably due to their tolerance of low water activities (0.78-0.83) and their good growth at low temperatures on protein-rich substrates.

The surface of raw sausages can be contaminated with conidia, ascospores and fragments of mold mycelium that are "floating" in the ambient air. The number of mold spores or fragments depends on the surrounding conditions (climate, season, hygiene conditions). However, the majority of these airborne contaminants cannot grow on the product surfaces. This is another reason why it is important to differentiate between mold contaminants in the environment.

Chitosan is a biopolymer with antimicrobial properties. The commercially available polymer is mainly obtained by incomplete deacetylation of chitin from the exoskeleton of crustaceans (being a glucosamine polymer with an acetylation of one out of nine glucosamine units evenly distributed throughout the polymer, with the molecular formula C₅₆H₁₀₃N₉O₃₉; a molecular weight of 1526.5 g/mol; CAS 9012-76-4). Based on the range of its molecular weight, such crustacean chitosan is generally classified into three different types, namely, high molecular weight chitosan (HMWC, >700 kDa), medium molecular weight chitosan (MMWC, 150-700 kDa), and low molecular weight chitosan (LMWC, less than 150 kDa). Due to its polycationic property, chitosan interacts with negatively charged substances, resulting in antimicrobial activity against bacteria, yeasts and molds. In recent years, extensive work has been published with the aim of optimizing the quality of fruits and vegetables by coating them with chitosan, notably with crustacean-based chitosan, if not specifically stated otherwise. Recent work by Perdones et al., Food Hydrocolloids 36 (2014), has shown that a combination of such crustacean-based chitosan with essential oils (cinnamon oil, lemongrass oil and others) can synergistically enhance the antimicrobial effect.

Chitosan is also available from other sources. For instance, fungal chitosan generally has a lower molecular weight of 27-190 kDa (P. Pochanavanich et al., Lett Appl Microbiol. 35(1):17-21 (2002); doi: 10.1046/j.1472-765x.2002.01118.x) approximately corresponding with the LMWC of the crustacean chitosan, while commercially available fungal chitosans have an even lower molecular weight of about 6.2-46 kDa (e.g., EMU3620 Chitoly AB from Handary). Apart from their molecular weight, the fungal chitosans differ from the crustacean-based chitosans in their degree/distribution of acetylation (T. Huq et al., J Bioresorces and Bioproducts 7(2):85-98 (2022); doi.org/10.1016/j.jobab.2022.01.002), molecular weight homogeneity, viscosity and charge distribution, which gives rise to significant differences of their chemical and physical properties and behavior. For instance, fungal chitosans have shown several beneficial properties such as the increase in settling activity, reduction of oxidized polyphenolics in juice and wine and control of the spoilage yeast Brettanomyces.

WO2018120704A1 provides a mildew-proof preservative film, comprising a base layer and a mildew-proof preservative coating provided on the base layer. The mildew-proof preservative coating is made from a mildew-proof preservative paint, which comprises mildew preventer. The mildew preventer comprises chitosan and camphor essential oil.

US2003113421A1 provides combinations of chitosan salts (chitosan sorbate and chitosan propionate) and certain essential oils (cinnamon, allspice, savory, red thyme) that act synergistically both to protect food products from bacterial and fungal contamination and inhibit growth and toxin production in foods contaminated with bacteria and fungi.

WO2023164692A1 provides paint and coating compositions including a low molecular weight chitosan composition, in which the chitosan having a number average molecular weight (Mn) of at most 40,000, 25,000, or 10,000 and chitosan is incorporated into coatings from 0.02 to 1.0, 0.02 to 0.75, 0.05 to 0.40, or 0.02 to 0.30 percent by weight of dry coating solids. It further discloses that chitosans having a low molecular weight may be incorporated into the coating compositions in higher loading amounts compared to chitosans having a higher molecular weight due to the lower viscosity of the chitosan having a low molecular weight. The chitosans having a low molecular weight also provide greater tensile strength than coating compositions formed with chitosan compounds having higher molecular weight. US20160286796A1 provides a removable food-processing shut-down spray composition comprising at least one or more antimicrobial agent (chitosan) and optionally, crossing-linking agent. It further provides the cross-linking agent decreases tackiness and prevents soil and microorganisms from physically adhering to the polymer film.

KR20170050872A provides a composition for preserving natural food using low molecular chitosan, a plant extract (e.g. cinnamon) and a plant essential oil. The invention further provides a method of producing a low molecular weight chitosan having a molecular weight of 10,000 to 100,000 by decomposing a 1 to 5 wt% chitosan solution containing a high molecular weight chitosan in an organic acid solution by a photodegradation method. The pH of the microemulsion is 3.5-5. EP3965887B1 provides a bio-conjugate comprising a chitosan derivative coupled to antimicrobial peptides (AMPs) for use in the treatment or prevention of microbial infections such as wound healing. It also provides a nanoparticles formulation or a gel/hydrogel formulation or a lyophilized foam formulation comprising the bio-conjugate of the invention.

Wardaba et al. (2021) provides a novel composite edible coating film that was developed from 0.8% chitosan and 0.5% sandalwood oil. Cellulose nanofibers (CNFs) 0.24% were used as a stabilizer agent of oil-in-water Pickering emulsion. Sandalwood oil acts as food flavoring and adjuvant, which also has antifungal potency.

Wu et al. (2019) provides an oil-in-water emulsions that contains 0.10 wt% chitosan, 5 wt% cinnamon oil, 5 wt% medium chain triglyceride, 2 wt% soy lecithin and has pH 5. It shows that the presence of chitosan increased the inhibition of mycelial growth and physical stability of the emulsions. The chitosan has molecular weight of 50-190 kDa.

Munhuweyi et al. (2017) provides a preparation of an edible film containing chitosan (20 g/l), acetic acid (10 g/l), glycerol (6 g/l) and Tween^{®}20 (2 g/l) and the film thickness and film mechanical properties will be increased with the addition of essential oils (0, 10, 50 and 100 g/l). The incorporation of certain essential oils including oregano, cinnamon and lemongrass essential oil also enhances the fungistatic activity of the chitosan films.

De Oliveira et al. (2014) provides a method to obtain chitosan from fungal *biomass Cunninghamella elegans* and the CHI obtained from C. *elegans* that was cultivated under optimized conditions and that strongly inhibited the post-harvest pathogenic fungi *B. cinerea* and *P. expansum* when applied as a coating on table grapes stored at room or cold temperature.

However, the crustacean-based chitosans, regardless of whether they are HMWC, MMWC or LMWC, when processed to form editable films and especially when utilizing essential oils as additional fungicides in line with Munhuweyi et al. (2017), frequently tend to uncontrolled polymerization/solidification so that the resulting product is no longer suitable for film forming.

In light of the above state of the art, the object of the present invention is to provide an antimicrobial/antifungal coating composition designed for applications on edible and non-edible food casings and on food packaging, and also directly on food products that gives rise to a strong antimicrobial effect while being safe and allergen-free. Such composition, if provided with suitable colorant or dye should also be suitable for applying marks and barcodes to food and food casings via printing, which marks and barcodes also exhibit the protection of the food and casings similar to the coating composition against fungal and yeast growth.

### Summary of the invention

It was now found that by admixing a fungal chitosan with a natural oil or extract comprising aromatic aldehydes a polymerization takes place and a stable composition, i.e., in the form of a gel or hydrogel, is obtained that can easily be processed and coated onto the foodstuff, casings of foodstuff and packaging of foodstuff and that still exerts the antimicrobial/antifungal properties inherit to its two starting components.

Thus, as a first aspect the invention provides an antimicrobial coating composition composed of about 0.1 wt.% to about 10 wt.%, preferably about 1 wt.% to about 10 wt.% fungal chitosan component, basis total coating composition, and a crosslinker component providing one or more aromatic aldehydes in an amount of about 0.01 to about 10 wt.%, preferably about 0.1 to about 3 wt.%, basis total coating composition, as effective crosslinking agents, the remainder being water and optional/additional components of the composition.

In a preferred embodiment of the first aspect, the coating composition is a printing ink further containing a suitable amount of colorant or pigment acceptable for nutritional purposes.

As a second aspect, the invention provides a method for preparing the antimicrobial coating composition of the first aspect of the invention, said method comprising the following steps:
(a) mixing an aqueous solution of the fungal chitosan component,
(b) mixing an aqueous solution of the crosslinker component, and optionally adding required additional components to the mixture; and
(c) crosslinking and gel formation by combining the mixture of (a) or (b).

As a third aspect of the invention, the invention provides for the use of the antimicrobial coating composition for coating and/or marking foodstuff, food-containing casings including raw sausages, and food packaging.

As a fourth aspect, the invention provides an antimicrobial printing ink comprising the coating composition of the first aspect and a suitable amount of colorant or pigment acceptable for nutritional purpose.

### Brief Description of the Figures

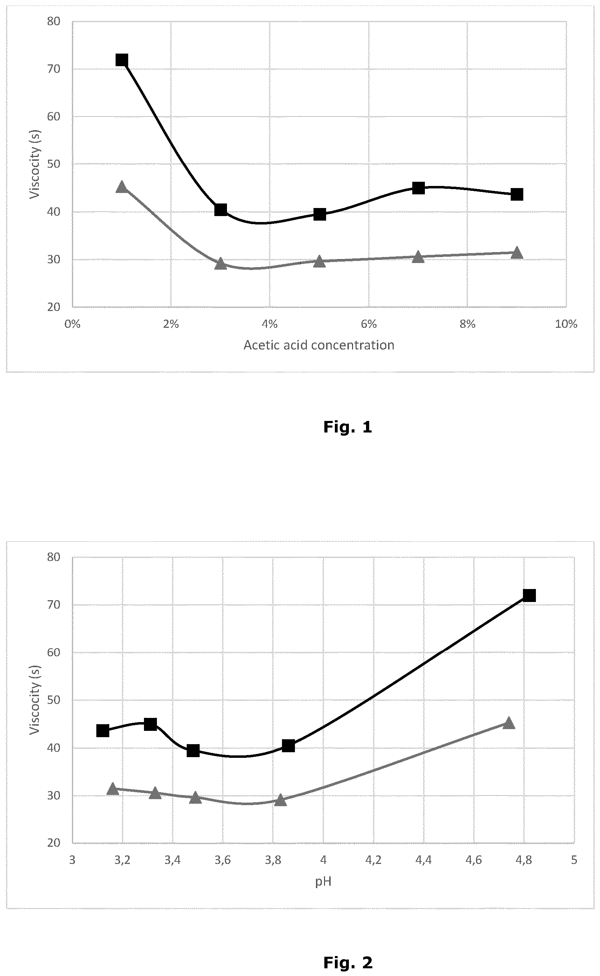

Figure 1 shows the effect of acetic acid concentration on the viscosity of chitosan and fungal chitosan: 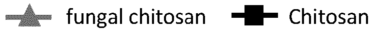 A 1% acetic acid solution maximizes the viscosity of low molecular weight fungal chitosan and MMWC crustacean chitosan solutions. For the low molecular weight fungal chitosan, viscosity significantly decreases as the acetic acid concentration increases from 1% to 3%, and then remains relatively stable at higher acetic acid concentrations. For the crustacean chitosan, the viscosity decreases significantly from 1% to 3%, similar to fungal chitosan, but at higher concentrations (7% and 9%), the viscosity slightly increases.
Figure 2 shows the effect of pH on the viscosity of chitosan and fungal chitosan: 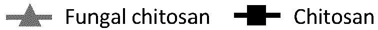 The chitosan solution reaches its maximum viscosity when the pH is around 4.7.
Figure 3 is a comparison between viscosity of chitosan solution (low molecular weight fungal and MMWC crustacean) with crosslinker: 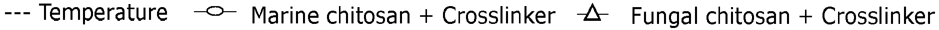
Figure 4 shows the results of texture analysis of fungal and marine (crustacean) chitosan: 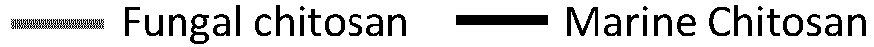 It shows the behavior of the fungal chitosan (grey line) and of the standard chitosan (dark line) under the strength of the texture analysis.
Figure 5 shows the products referred to in Fig. 4, fungal chitosan in combination with crosslinking solution (left dish) and on the right crustacean chitosan with crosslinking solution (right dish). It can be seen that the texture of the fungal chitosan solution is much softer and not as stable as that of the marine chitosan.

### Detailed description of the invention

The first aspect the present invention provides a novel antimicrobial and/or antifungal coating composition designed for applications on edible and non-edible food casings, including non-edible cellulose casings used in the food industry, directly on food products and on food packaging. The coating composition is generally a gel-like or hydrogel-like coating composition that is obtainable by admixing and polymerizing two separate components in form of aqueous solutions that, when combined, create a potent antimicrobial and antifungal composition that can be applied to the casing, packaging or foodstuff. The first component is an aqueous chitosan solution derived from fungi, the chitosan solution is optionally acidified, i.e. dissolved in a 1% acetic acid solution. This chitosan is allergen-free, unlike traditional chitosan originating from crustaceans. The second solution is a cross-linker solution containing an aromatic aldehyde, for instance, in form of essential oils or extracts, which generally also exhibit antifungal, but also levurocidal properties. The levurocidal properties prevent the cellulose activity of yeast on casings, which can lead to the formation of holes. Upon admixture of the two solutions, a polymerization reaction occurs, resulting in a gel-like or hydrogel-like composition that can be applied to the casing or directly to the foodstuff to harden and form an antimicrobial and antifungal layer. This innovative composition can be applied via flexographic printing and other coating techniques such as UV printing, bubble-coating, spraying, dipping, which provide for a customizable and effective method for protecting cellulose casings from fungal and yeast growth. The combination of fungal chitosan and essential oils ensures a strong antimicrobial effect while being safe and allergen-free.

In a preferred embodiment, the coating composition is composed of about 1-3 wt.%, preferably about 2% fungal chitosan component. It is further preferred that the fungal chitosan is a low molecular weight chitosan with an average molecular weight of less than 300 kDa, or less than 200 kDa, or less than 150 kDa, preferably has an average molecular weight in the range from about 3 to about 100 kDal, most preferably in the range from about 5 to about 50 kDa (the fungal chitosan used in the Examples having a molecular weight of 6.21-46.33 kDa, corresponding to 6210 to 46330 g/mol). It is furthermore preferred that the fungal chitosan is derived from a fungal organism selected from *Agaricus bisporus, Mucor rouxii, Absidia coerulea, Aspergillus nidulans, Colletotrichum lindemuthianum, Aspergillus niger, Penicillium notatum, Phycomycetes mucor, Pleurotus ostreatus.*

In another preferred embodiment the aromatic aldehyde of the crosslinker component is an aldehyde of the cinnamon aldehyde-type, preferably comprises cinnamon aldehyde. It is preferred that the crosslinker component is a natural oil or extract comprising aromatic aldehydes, preferably is an oil or extract selected from tarragon oil, oregano oil, cinnamon oil and mixtures thereof or an essential oil with aldehyde groups referred to in Table 1 below (notably bitter almond, vanillin, olive oil extract). In a particularly preferred embodiment, the crosslinker component comprises cinnamon oil, preferably in an amount of about 0.1 to about 10 wt.%, preferably in an amount of about 1 to about 3 wt.%, basis total coating composition. In a further preferred embodiment, the crosslinker component further contains one or more natural oils or extracts without aromatic aldehydes that are inferior in their crosslinking ability compared to those with aromatic aldehydes but enhance the antimicrobial/antifungal activity of the resulting composition, notably such aromatic oils or extracts without aromatic aldehydes are those mentioned in Table 1 below. In particular, such aromatic oils or extracts without aromatic aldehydes include, but are not limited to, lemongrass oil, tea tree oil, oregano oil, thyme oil, eucalyptus oil, clove oil, rosemary oil, garlic extract, ginger oil, lavender oil, peppermint oil, basil oil, sage oil, bergamot oil, grapefruit seed extract, onion extract, garlic creeper, zimmu, chamomile, Gmelin's wormwood, hairy beggarticks, caraway, cassia, American wormseed, grapefruit, mandarin, orange, cumin, devil's trumpet, pickling herb, tarbush, fennel and drooping juniper, as well as lavender, malva, spikenard, holy basil, oregano, geranium, boldo, allspice, rosemary, satureja, clove, digoxin, lucky nut, yellow oleander, Madagascar periwinkle, winged prickly ash, and zataria.

In a particular preferred embodiment, the crosslinker component comprises a combination of cinnamon oil, lemongrass, bitter almond, and/or vanillin, preferably in an amount of about 0.5 to about 4 wt.%, preferably about 1 to about 3 wt.%, basis total coating composition.

In another preferred embodiment the coating composition further comprises one or more non-ionic detergents, preferably in an amount of about 0.01 to about 5 wt.%, most preferably 0.5 to about 3 wt.%, basis total coating composition. Suitable non-ionic detergents are selected from detergents of the Polysorbate series, ethoxylated sorbitans esterified with a fatty acid, such as Polysorbate 20 (polyoxyethylene (20) sorbitan monolaurate, Tween^{®}20), Polysorbate 40 (polyoxyethylene (20) sorbitan monopalmitate; Tween^{®}40), Polysorbate 60 (polyoxyethylene (20) sorbitan monostearate, Tween^{®}60) and polysorbate 80 (polyoxyethylene (20) sorbitan monooleate, Tween^{®}80), sorbitan fatty acid esters such as Span, poly(alkylene-oxide) block copolymers, and oligomeric alkyl-ethylene oxides such as Brij^{®} and Tergitol^{®}. In another preferred embodiment, the coating composition further comprises additional nutritionally acceptable components including
(i) one or more emulsifiers, preferably emulsifiers selected from mono- and diglycerides of fatty acids, lecithin, and sucrose esters of fatty acids; and/or
(ii) one or more thickeners, preferably thickeners selected from chitosan, xanthan gum, hydroxypropyl methylcellulose (HPMC), guar gum, carrageenan, pectin, starches, Locust bean gum, agar agar and tara gum; and/or
(iii) one or more buffers, preferably selected from sodium, potassium and calcium salt-containing phosphate-, citrate-, carbonate-, bicarbonate-, acetate- and lactate buffers; and/or
(iv) lubricants preferably polyhydroxy components such as glycerin; and/or
(v) additional antimicrobial agents, preferably selected from algae extracts; and/or
(vi) colorants and/or pigments, preferably colorants and pigments selected from titanium dioxide, iron oxides, riboflavin, caramel color, anthocyanins, black tea and carmine.

In a further particular preferred embodiment, the coating composition is composed of about 1 to 5 wt.%, preferably about 1 to 3 wt.% of a fungal chitosan with an average molecular weight in the range from about 5 to about 50 kDa; about 1 to about 10 wt.%, preferably about 1 to about 3 wt.%, of a the crosslinker component comprising a combination of cinnamon oil, lemongrass, bitter almond, and/or vanillin; about 0.5 to about 10 wt.%, preferably about 0.5 to about 3 wt.%, of Tween^{®}, basis total coating composition, the remainder being water and optional/additional components of the composition, e.g. the lubricant glycerin in an amount of about 0.1 to about 5 wt.%.

In a further preferred embodiment the coating composition, after crosslinking, has a pH of about 4-5. Such pH is adjusted by adding suitable buffers as defined hereinbefore.

As set forth above, in the third aspect of the invention the coating composition is a printing ink containing a suitable amount of colorant and/or pigment acceptable for nutritional purposes. Suitable pigments and colorants are those referred to in connection with the first aspect above.

In the preferred embodiment of the second aspect, in the method for preparing the antimicrobial coating composition, the pH of the mixtures prior to crosslinking is preferably adjusted to a pH of about 4-5.

It is furthermore preferred in the method that the crosslinking is induced by applying light, e.g. by bringing the combined mixture of (c) into contact with sunlight. Alternatively/additionally, the yield of crosslinking reaction of the combined mixture of (c) may be induced by bringing it to a temperature from 20 to 45 °C. As temperature increases, the yield of Schiff base reactions tends to improve. For example, in non-assisted reactions, the yield increased from 58% at 5 °C to 84% at 45 °C. It is particularly preferred for the sake of simplicity that the crosslinking is performed at room temperature.

Unless defined otherwise, all technical and scientific terms used herein have the same meaning as is commonly understood by one of skill in art to which the subject matter herein belongs. As used herein, the following definitions are supplied in order to facilitate the understanding of the present invention.

"Chitosan": Chitosan not only serves as a support for antimicrobial substances but also acts as an antimicrobial agent.

Fungal chitosan exhibits a significantly lower molecular weight compared to crustacean chitosan as explained hereinbefore, in the experiments described below a fungal chitosan has an average molecular weight of 6210 to 463300 g/mol (corresponding to 6.21-46.33 kDa) as compared with a crustacean-based MMWC chitosan having an average molecular weight of about 585 kDa. This difference significantly affects their physicochemical behavior, such as viscosity.

The viscosity of fungal chitosan is generally lower than that of crustacean chitosan, which is a desirable characteristic for applications in flexographic processes. Specifically, the viscosity of fungal chitosan decreases more rapidly with increasing acetic acid concentration compared to crustacean chitosan.

Crustacean chitosan forms harder and more stable gel-like compositions than fungal chitosan, especially when higher concentrations of chitosan and cross-linkers are used.

Unlike other chitosans, fungal chitosan does not contain allergens such as Tropomyosin, commonly found in chitosan derived from crustaceans. The solution comprises fungal chitosan is allergen-free. Moreover, fungal chitosan serves as a carrier for the essential oils.

The fungal chitosan can originate from various fungi, including: *Agaricus bisporus, Mucor rouxii, Absidia coerulea, Aspergillus nidulans, Colletotrichum lindemuthianum, Aspergillus niger, Penicillium notatum, Phycomycetes mucor, Pleurotus ostreatus.*

Fungal chitosan exhibits strong antimicrobial activity against lactic acid bacteria, various fungi, and particularly the yeast *Debaryomyces hansenii.* This yeast grows on the surface of sausages, creating holes in cellulose casings through the action of cellulase enzymes it produces.

Based on the literature as well as applicant's own investigations, the following molds were identified as a representative (all isolated from fermented meat products and stored as spore suspensions in the strain collection at -80 °C): (i) *Aspergillus sp. ISI 56* (very robust mold, difficult to inhibit); (ii) *Penicillium nalgiovense* ISI 63; and (iii) *Penicillium soltium* ISI 244.

Although yeasts are a component of starter cultures to be used within the meat batter, either the added yeast or recontaminating yeasts from the environment can grow to the point where they are visually apparent on the surface and considered as soilage organisms. In addition, such yeasts can produce cellulases which are responsible for the formation of holes in cellulose casings. In internal analysis of industrially produced raw sausages on which yeast growth was visible, *Debaryomyces hansenii* could be detected in almost all cases. Therefore, a pool of three strains of this species was used for the analysis. All strains were isolated from raw sausages. These were genetically identified by RNA sequencing and are stored as frozen cultures at -80 °C in the strain collection.

"Cross linker component": the cross-linker component comprises essential oils that exhibit significant antimicrobial and antifungal properties. The essential oils are selected from tarragon oil, lemongrass oil, oregano oil, cinnamon oil. The essential oils react with chitosan and create a resilient film network. They also exhibit significant antimicrobial and antifungal properties. Further essential oils with antimicrobial properties that can be used in the present invention are listed in the following Table 1.

**Table 1: Essential oils with antifungal activities**

| Scientific plant name | Colloquial plant name | Sensitive fungi | Reference |
|---|---|---|---|
| *Adenocalymma alliaceum* | garlic | *A. niger, A. flavus,* C. *cladosporioides, Mucor sp., Dreschlera sp.* y *F. roseum* | Shukla et al. (2008) |
| *Allium cepaL.* × *Allium sativum L.* | bulbous garlic | *A. solani* | Latha et al. (2009) |
| *Anthemis nobilis L.* | mayweed | *A. candidus, A. niger, Penicillium sp.* y *F. culmorum* | Magro et al. (2006) |
| *Artemisia dubia* | mugwort | *Alternaria brassicicola* | Parajuli et al. (2005) |
| *Artemisia gmelinii* | | *A. brassicicola* | Parajuli et al. (2005) |
| *Bidens pilosa* | beggarticks | *F. oxysporum* y *F. solani* | Deba et al. (2008) |
| *Carum carvi* | caraway | *F. oxysporum, F. verticillioides, P expansum, P. brevicompactum, A. flavus* y *A. fumigatus* | Zabka et al. (2009) |
| *Cassia fistula* | purging cassia | *A. alternata* | Feng and Zheng (2007) |
| *Chenopodium ambrosioides* | dysphania | *A. flavus, A. fumigatus, Botryodiplodia theobromae, F. oxysporum, P. debaryanum* y S. *rolfsii* | Kumar et al. (2007) |
| *Cinnamomum zeylanicum* | cinnamon | *A. niger, A. flavus, F. moniliforme, F. graminearum, Fusarium spp., P. citrinum* y *P. viridicatum* | Singh et al. (2007), Velluti et al. (2004) |
| *Citrus limon L.* | citrus fruit | *P. chrysogenum, P. verrucosum, A. niger* y *A. flavus* | Viuda-Martos et al. (2008) |
| *Citrus paradisi L.* | | *P. chrysogenum, P. verrucosum, A. niger* y *A. flavus* | Viuda-Martos et al. (2008) |
| *Citrus reticulata L.* | | *P. chrysogenum, P. verrucosum, A. niger* y *A. flavus* | Viuda-Martos et al. (2008) |
| *Citrus sinensis L.* | | *P. chrysogenum, P. verrucosum, A. niger* y *A. flavus* | Viuda-Martos et al. (2010) |
| *Cuminum cyminum* | cumin | *F. solani, F. oxysporum, F. oxysporum f. sp. tulipae, F. verticillioides, F. poae, F. equiseti, R. solani, B. cinerea* y *A. niger* | Naeini et al. (2010), Boyraz and Özcan (2005) |
| *Cymbopogon nardus* | Citronella grass | *F. oxysporum, F. verticillioides, P. expansum, P. brevicompactum, A. flavus* y *A. fumigatus* | Zabka et al. (2009) |
| *Cymbopogonspp* | | *Fusarium spp* | Velluti et al. (2004) |
| *Datura metel L.* | thorn apple | *A. solani* | Latha et al. (2009) |
| *Echinophora tenuifolia* | | *R. solani, Fusarium oxysporum f. sp. tulipae, B. cinerea* y *A. citri* | Boyraz and Özcan (2005) |
| *Eucalyptus globulus* | | *A. flavus* y *A. parasiticus* | Vilela et al. (2009) |
| *Flourensia cernua* | | *Alternaria sp., F. oxysporum* y *R. solani* | Jasso de Rodriguez et al. (2007) |
| *Flourensia microphylla* | | *Alternaria sp., F. oxysporum* y *R. solani* | Jasso de Rodríguez et al. (2007) |
| *Foeniculum vulgare* | fennel | *Phytophthora infestans* | Soylu et al. (2006) |
| *Juniperus excelsa* | juniper | *A. brassicicola* | Parajuli et al. (2005) |
| *Lavandula stoechas subsp. stoechas* | | *P. infestans* y *B. cinerea* | Soylu et al. (2006), Soylu et al. (2010) |
| *Malva sylvestris L.* | | *A. candidus, A. niger, Penicillium sp.* y *F. culmorum* | Magro et al. (2006) |
| *Nardostachys grandiflora* | | *A. brassicicola* | Parajuli et al. (2005) |
| *Ocimum sanctum L.* | | *A. solani* | Latha et al. (2009) |
| *Origanum syriacum var. bevanii* | | *P. infestans* y *B. cinerea* | Soylu et al. (2006), Soylu et al. (2010) |
| *Pelargonium roseum* | cranesbill | *F. oxysporum, F. verticillioides, P. expansum, P. brevicompactum, A. flavus* y *A. fumigatus* | Zabka et al. (2009) |
| *Pimenta dioica L.* | | *F. oxysporum, F. verticillioides, P. expansum, P. brevicompactum, A. flavus* y *A. fumigatus* | Zabka et al. (2009) |
| *Rosmarinus officinalis* | | Rosmarin: *P. infestans* y *B. cinerea* | Soylu et al. (2006), Soylu et al. (2010) |
| *Satureja hortensis* | | *R. solani, Fusarium oxysporum f. sp. tulipae, B. cinerea* y *A. citri* | Boyraz und Özcan (2005) |
| *Syzygium aromaticum* | clove | *A. niger* y *Penicillium spp.* | Velluti et al. (2004) |
| *Thymbra spicata subsp. spicata* | thyme | *P. infestans* | Soylu et al. (2006) |
| *Thymus linearis* | | *A. brassicicola* | Parajuli et al. (2005) |
| *Thymus vulgaris* | | *F. oxysporum, F. verticillioides, P. expansum, P. brevicompactum, A. flavus, A. alternata* y *A. fumigatus* | Zabka et al. (2009), Feng and Zheng (2007) |
| *Vinca rosea L.* | | *A. solani* | Latha et al. (2009) |
| *Zanthoxylum armatum* | | *A. brassicicola* | Parajuli et al. (2005) |
| *Zataria multiflora* | | *F. solani, F. oxysporum, F. verticillioides* y *F. poae* | |

"Polymerization reaction": When fungal chitosan and essential oils are combined, a polymerization reaction occurs between the chitosan and the essential oils, which is fully hardening within a few hours.

The formation of a gel-like composition using natural aldehydes, alone or in combination with a non-ionic surfactant such as Tween^{®} 80, suitable for being printed on cellulose casings for mold growth inhibition is not known in the art, as there appears to be no existing literature documenting this specific application.

The formation of this hydrogel-like composition results in a stable structure whose reversibility can be influenced by factors such as temperature, pH, or the concentration of substances. The network formed by chitosan and natural crosslinking agents provides a supporting structure for other essential oils, enhancing their stability and preventing evaporation, especially at elevated temperatures (for instance, cellulose casing printing involves exposure to 130 °C for a few seconds to fix the chitosan film to the cellulose surface). By encapsulating the essential oils within this structure, their evaporation rate is significantly reduced, allowing them to function as effective antimicrobials.

The gist of the present invention resides in the use of natural aldehydes (alone or in combination with a polysorbate detergent such as Tween^{®} 80 as crosslinkers for chitosan) for the formation of a resistant three-dimensional network of a coating composition to be printed on cellulose casings, and that such coating composition provides for antimicrobial and antifungal properties.

The coating composition of the invention further contains pigments, which are added for customized printing according to client specifications. The pigments allow the cellulose casing or the foodstuff to be colored as desired, enhancing its visual appeal and marketability. It is important to note that not the entire surface of the casing or foodstuff must be coated for the marking/printed.

To ensure smooth application, the coating composition also contains other substances such as glycerin, antifoam agents, and antifriction agents. These additives facilitate the flexographic printing process, ensuring that the mixture adheres properly to the cellulose casing and forms a consistent and durable coating.

The invention is designed to be printed on the surface of the foodstuff, edible food casings and non-edible cellulose food casings including the skin of raw sausages, and food packaging. The solution is applied through the flexographic printing process, similar to how printing ink is applied. The printing process is applied exclusively to the exterior surface of the casing. This method ensures that the protective film does not interfere with the meat product inside while still providing a barrier against microbial growth on the casing.

While the primary design of this invention is for application via flexographic printing on cellulose casings, its versatility allows it to be used for coating other types of food packaging that do not come into direct contact with the food product. This broadens the potential applications of the invention, making it a valuable food in various sectors of the food packaging industry.

The following examples are presented to illustrate the present invention in further detail and should by no means be construed as limiting the scope thereof.

### Examples

### Example 1: Preparation of Antifungal Chitosan Coatings

### 1. Preparation of Chitosan Solutions

Two different types of chitosan were used in this experiment:
Fungal Chitosan: EMU3620 Chitoly AB from Handary (molecular weight in the range of 6.21-46.33 kDa.
Crustacean Chitosan: A2 Chitosan DAC90 from A2 Trading GmbH (average molecular weight of about 585 kDa).
Each type of chitosan was prepared as a 1% solution, and chitosan was dissolved in a 1% acetic acid solution.
The mixture was stirred for 1 min at 4000 rpm using a Utra Turax mixer. Both solutions dissolved without issues.

**Table 2: Experimental design**

| | Components | | | |
|---|---|---|---|---|
| Samples name | 1% Crustacean chitosan | 1% Fungal chitosan | Glycerin | Crosslinker* |
| M1 | 100% | | | |
| M2 | | 100% | | |
| M3 | 98.5 % | | 1.5 % | |
| M4 | | 98.5% | 1.5 % | |
| M5 | 92.5% | | | 7.5% |
| M6 | | 92.5% | | 7.5% |

| | | | | |
|---|---|---|---|---|
| *Contain essential oils, Tween^{®} 80 and glycerin | | | | |

### 2. Measurements of pH

**Table 3-1: pH measurements**

| sample of crustacean chitosan | pH |
|---|---|
| crustacean chitosan | 7,80 |
| acetic acid solution | 3,3 |
| M1 (crustacean chitosan solution) | 4,14 |
| M3 (crustacean chitosan + glycerin) | 4,23 |
| M5 (crustacean chitosan + crosslinker) | 4,17 |

**Table 3-1: pH measurements**

| sample of fungal chitosan | pH |
|---|---|
| Fungal chitosan alone | 7,77 |
| acetic acid solution | 3,3 |
| M2 (fungal chitosan solution) | 4,15 |
| M4 (fungal chitosan + glycerin) | 4,15 |
| M6 (fungal chitosan + crosslinker) | 4,09 |

Chitosan in acidic media becomes a polyelectrolyte because of the protonation of the -NH₂ groups. The following equilibrium reaction describes the state of ionization of chitosan:

Chit-NH₂ + H₃O⁺ ←→ Chit-NH₃⁺ + H₂O

### 3. Examination of the Effect of Acetic Acid Concentration and pH on the Viscosity of Chitosan Solutions

To examine the effect of acetic acid concentration and pH on the viscosity of chitosan solutions, 1% of chitosan was dissolved in solutions with acetic acid concentrations of 1 %, 3 %, 5 %, 7 %, and 9 %.

As shown in Fig. 1, a 1% acetic acid solution maximizes the viscosity of both chitosan solutions. For the fungal chitosan, viscosity significantly decreases as the acetic acid concentration increases from 1 % to 3 %, and then remains relatively stable at higher acetic acid concentrations. For the standard crustacean chitosan, the viscosity decreases significantly from 1 % to 3 %, similar to fungal chitosan, but at higher concentrations (7 % and 9 %), the viscosity slightly increases.

The results in Fig. 2 indicate that the viscosity of the chitosan solution reaches its maximum when the pH is around 4.7. This suggests that chitosan degradation is minimal at this pH. Chitosan dissolves in acidic media due to the protonation of its amino groups. When the acetic acid concentration is too high, the excess free H⁺ ions lower the pH, intensifying the degradation of chitosan and resulting in lower viscosity. However, increasing acid concentration might lead to higher ionic strength, promoting aggregate formation or polymer chain association, which could explain the slight increase in viscosity observed at higher acetic acid concentrations for standard chitosan.

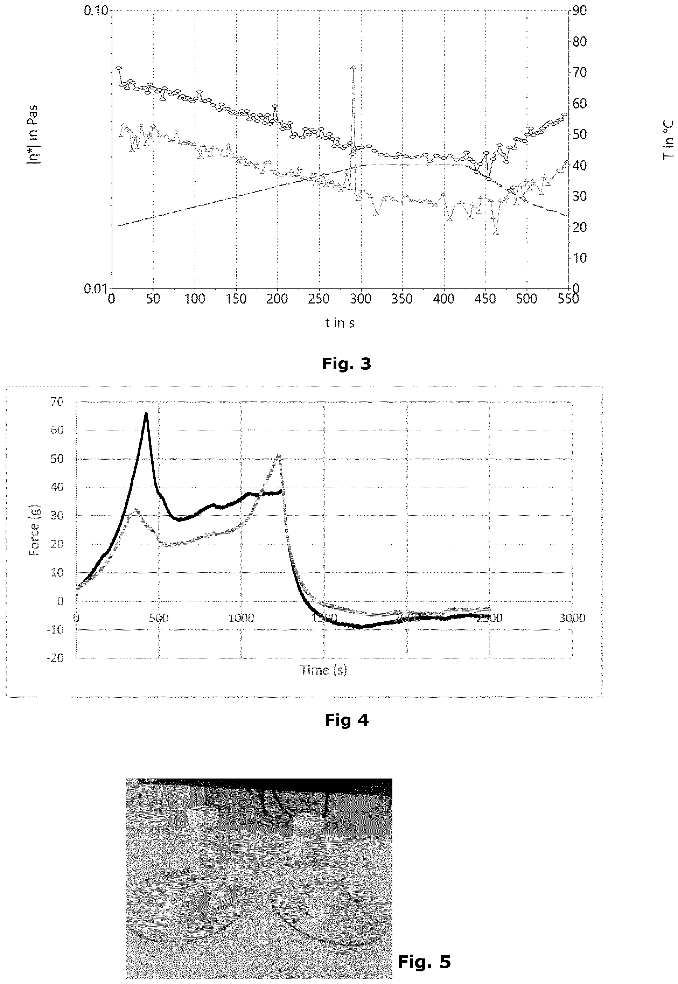

In summary, the observed behavior aligns with the expected scientific understanding that increasing acetic acid concentration reduces the pH of chitosan solutions, enhancing protonation and further degradation of chitosan, thereby reducing viscosity. The differences between fungal and standard chitosan are likely related to their intrinsic characteristics such as molecular weight and degree of deacetylation. Furthermore, Fig. 3 compares the viscosity (|η*|) and temperature (T) over time for two chitosan samples tested with a 3% concentration of chitosan and essential oils as crosslinkers: crustacean-derived chitosan and fungal chitosan. The x-axis represents time (t) in seconds, while the left y-axis shows the viscosity in Pa·s and the right y-axis displays the temperature in °C. The key observations are the following:
1. Viscosity Difference between Samples: The crustacean chitosan sample exhibits a significantly higher viscosity than the fungal chitosan sample. This difference in viscosity remains fairly constant throughout the test, suggesting that there are some structural differences between fungal and crustacean chitosan than influence in the viscosity, for example molecular weight and more interactions with the crosslinking system.
2. Temperature and Viscosity Correlation: As the temperature is gradually raised to around 40 °C, both samples show a decrease in viscosity. This trend indicates a typical thermally-induced reduction in viscosity, as higher temperatures generally reduce molecular interactions within the chitosan matrix.
3. Viscosity Recovery upon Cooling: When the temperature decreases back to approximately 20 °C, the viscosity of both samples increases, demonstrating reversible thermal behavior. This suggests that the samples are structurally stable, returning to a higher viscosity as the temperature decreases.

In summary, fungal chitosan consistently displays lower viscosity than crustacean chitosan under identical conditions, and both types exhibit a temperature-dependent reversible behavior, where viscosity decreases with heating and recovers upon cooling. 4. Molecular weight: Compared to chitosan from marine sources (molecular weight, MW, 585 kDa), fungal chitosans applied in the present invention showed lower MW (6.21-46.33 kDa).

Other sources state: Chitosan from fungal mycelia has medium-low molecular weight (1-12 × 10⁴ Da), whereas that from crustacean sources has a higher molecular weight (about 1.5 × 10⁶ Da).

5. Formation of gel-like or hydrogel-like composition: Hydrogels are prepared via chemical (permanent bonds) or physical cross-linking. Methods for chemical cross-linking of hydrogels include i) radical polymerization, ii) photopolymerization, iii) enzymatic reactions, iv), and covalent cross-linking via linkers such as aldehydes. In contrast, physical cross-linking forms a nonpermanent network with physical interactions such as hydrogen or electrostatic bonds, physical entanglements, and crystal formation.

Solutions of each chitosan at 1% and 2% were mixed with equal amounts of crosslinker solution. The crosslinker solution contain cinnamon oil, oregano oil, lemongrass oil, Tween^{®} 80 and glycerin.

The 1% chitosan solutions showed no gel formation, while the 2% chitosan solutions showed gel formation after three days (the tests were left at room temperature in contact with the sun) with the standard chitosan being harder and more stable than the fungal chitosan. The following graph in Fig. 4 shows in grey line the behavior of the fungal chitosan and in dark of the standard chitosan under the strength of the texture analysis.

Gel formation seems to depend in this case on chitosan concentration, crosslinker concentration and chitosan characteristics as molecular weight and viscosity.

A. Formation of hydrogel with different essential oils: The objective was to identify which essential oil induces hydrogel formation. A 2% chitosan solution was prepared and mixed separately with different essential oils. According to the literature, chitosan can potentially form covalent bonds with the aldehyde groups present in essential oils, leading to hydrogel formation. This reaction between chitosan and aldehydes produces Schiff base compounds, which are call imine.

B. Effect of Temperature: To determine whether temperature influences the rate of gel formation, the samples were divided into two groups. One group was maintained at 4 °C for 7 d (days), while the other was exposed to a temperature of 60 °C for 1 d, without light exposure, followed by 6 d at room temperature, also shielded from sunlight. In neither condition was gel formation observed.

**Table 4: Hydrogel formation between 2% chitosan solution and additives**

| additive (%); remainder: 2% chitosan solution | observed effect |
|---|---|
| 7,5% crosslinker* + | hydrogel formation |
| 7.5% oregano oil | no gel formation, light phase separation, solution is cloudy |
| 7.5% lemongrass oil | no gel formation, light phase separation, solution is cloudy |
| 7.5% cinnamon oil | no gel formation, light phase separation is observed |
| 7.5% Tween^{®} 80 | no gel formation, solution is homogeneous and clear |
| 7.5% glycerin | no gel formation, solution is homogeneous and clear |

| | |
|---|---|
| * composed of cinnamon oil, lemongrass oil, oregano oil, Tween^{®} 80, and glycerin at a vol. ratio of 2:1:3:6:3. | |

In this case it must be said that there was no stable emulsion formation between the chitosan solution and the essential oil, so it is now investigated to use an organic surfactant to improve the solubility of the essential oil in the aqueous solution of chitosan.

c. Hydrogel formation with different essential oils in combination with Tween^{®} 80 Natural aldehydes, such as cinnamaldehyde, can be used to modify the properties of chitosan-based materials by covalent cross-linking the chitosan molecules.

Due to the non-polarity and hydrophobicity of e EOs, Tween^{®} 80 was used to prepare homogeneous EOs-chitosan solutions.

Tween^{®} 80 is a hydrophilic (water-attracting) surfactant, which allows it to mix well with water and help solubilize hydrophobic (EOs) substances in aqueous solutions. To identify the combination that promotes hydrogel formation, a 2% chitosan solution was mixed with various essential oils in the presence of Tween^{®} 80. The samples were left in contact with sunlight at room temperature.

**Table 5: Hydrogel formation between 2% chitosan solution and EOs with Tween^{®} 80**

| additive (ml); remainder: 2% chitosan solution | |
|---|---|
| 7.5 ml crosslinker* | gel formation |
| 3 ml Tween^{®} 80 + 1 ml oregano oil | no gel formation |
| 3 ml Tween^{®} 80 + 1 ml lemongrass oil | no gel formation** |
| 3 ml Tween^{®} 80 + 1 ml cinnamon oil | gel formation after 3 h |
| 3 ml Tween^{®} 80 + 1.5 ml glycerin | no gel formation |
| 3 ml crosslinker* | no gel formation |

| | |
|---|---|
| * composed of cinnamon oil, lemongrass oil, oregano oil, Tween^{®} 80, and glycerin at a vol. ratio of 2:1:3:6:3; ** gel formation occurs at higher pH values. | |

In conclusion, the above examples show that mixing cinnamon oil with an aqueous chitosan solution did not promote gel formation but mixing Tween^{®} 80 with cinnamaldehyde led to gel formation at room temperature in 3 h.

Lemongrass oil according to the literature also contains aldehydes (Citral and Geranial), but these aldehydes are aliphatic aldehydes and in this case no gel formation was observed, also not in combination with Tween^{®} 80. This may be due to the dose used, the pH of the solution or that the essential oil is not very rich in these substances.

Oregano oil contains no aldehyde groups in its composition and as expected there was no gel formation when mixed with chitosan and Tween^{®} 80.

On the other hand, something that caught the attention is that there was also no gel formation using 3% of crosslinker. In a past experiment, 7.5% crosslinker was used and gel formation was observed after 3 days. This suggests that the concentration of cinnamon oil plays an important role in the rate of gel formation.

### Example 2: Antimicrobial Assessment

In this study, the minimum inhibitory concentration (MIC) of four antimicrobial substances - namely cinnamon oil, oregano oil, lemongrass oil, and Chitoly AB (fungal chitosan) - against three indicator strains *Aspergillus niger, Penicillium nalgiovense, and Debaryomyces hansenii* was assessed and the lowest concentration required to inhibit visible microbial growth was assessed.

The tested microbial species *(Aspergillus niger, Penicillium nalgiovense,* and *Debaryomyces hansenii)* are highly relevant to meat processing. *Aspergillus niger* and *Penicillium nalgiovense* are molds that can act as spoilage organisms. *Debaryomyces hansenii* is a common yeast in fermented meats, valued for its contribution to flavor and preservation, but it can also act as a spoilage agent if overgrown producing cellulases, enzymes that can damage the cellulose casings. The MIC values for the four tested substances are summarized in the following Table 6.

**Table 6: MIC values**

| Substance | *Aspergillus niger* (ISI 56) | *Penicillium nalgiovense* (ISI 63) | *Debaryomyces hansenii* (ISI 1144) |
|---|---|---|---|
| cinnamon oil | 156 ppm | 625 ppm | 2500 ppm |
| oregano oil | 20 ppm | 20 ppm | 156 ppm |
| lemongrass oil | 625 ppm | > 2500 ppm | 2500 ppm |
| Chitoly AB | > 2500 ppm | > 2500 ppm | 78 pm |

| | | | |
|---|---|---|---|
| 1. Cinnamon oil: Exhibited significant antimicrobial activity against *Aspergillus niger* with an MIC of 156 ppm, indicating high efficacy. Moderate inhibition was observed against *Penicillium nalgiovense* (625 ppm). Limited effect against *Debaryomyces hansenii* (2500 ppm), highlighting its lower efficacy against yeast-like fungi. Conclusion - effective against molds but less effective for yeast. 2. Oregano oil: Demonstrated outstanding antimicrobial activity across all tested strains. MIC values of 20 ppm against *Aspergillus niger* and *Penicillium nalgiovense* underline its potent mold-inhibitory properties. A low MIC of 156 ppm against *Debaryomyces hansenii* further supports its broad-spectrum effectiveness. Conclusion - highly effective and versatile antimicrobial agent for both molds and yeasts. 3. Lemongrass oil: Showed moderate activity against *Aspergillus niger* (625 ppm). No significant inhibition was detected for *Penicillium nalgiovense* at the tested concentrations (>2500 ppm). Limited activity was observed for *Debaryomyces hansenii* (2500 ppm). Conclusion - while moderately effective against some molds, it lacks efficacy for broader applications. 4. Chitoly AB (fungal chitosan): Remarkable efficacy against *Debaryomyces hansenii* with an MIC of 78 ppm. Conclusion - selective activity primarily effective against yeasts, with limited impact on molds. | | | |

### References cited

Patent documents:
   WO2018120704A1
   US2003113421A1
   WO2023164692A1
   US20160286796A1
   KR20170050872A
   EP3965887B1
Non-patent literature:
   Perdones et al., Physical Food Hydrocolloids 36:256-264 (2014).
   De Oliveira et al., Int J Food Microbiol 171:54-61 (2014).
   Wardana et al., Scientific Reports 11:18412 (2021).
   Wu et al., LWT - Food Science and Technology, doi: https://doi.org/10.1016/j.lwt.2019.02.029 (2019).
   Munhuweyi et al., Postharvest Biology and Technology 129:9-22 (2017).
   Mane et al., Biomacromolecules 22(3) (2022)
   Darwesh et al., Toxicol Rep 5:348-356 (2018)
   Jóźwiak et al., Reactive and Functional Polymers, 58-74 (2017)
   Chen et al., Food Hydrocolloids 61:662-671 (2016)
   Liang et al., Polymers 11(3):491 (2019)
   Lin et al., Foods 12(15):2921 (2023)
   T. Huq et al., J Bioresources and Bioproducts 7(2):85-98 (2022)
   Al Khulaifi et al., Breaking the Equilibrium and Improving the Yield of Schiff Base Reactions by Pervaporation: Application to a Reaction Involving n butylamine and Benzaldehyde (2023)
   R. Shukla et al. Foodborne Pathogens and Disease 5(6):701-708 (2008).
   P. Latha et al., Biological Control, 50(2):85-93 (2009).
   M. Magro et al., Revista Iberoamericana de Micologia 23(3):176-178 (2006).
   P. Parajuli et al., Scientific World 3(3): 35-41 (2005).
   F. Deba et al., Food Control 19(4): 346-352 (2008).
   M. Zabka et al., Industrial Crops and Products 30(2):250-253(2009).
   W. Feng et al., Food Control 18(9):1126-1130 (2007).
   R. Kumar et al., Int J Food Microbiol 115(2):159-164 (2007).
   G. Singh et al., Food and Chemical Toxicology 45(9):1650-1661 (2007).
   A. Velluti et al. Int J Food Microbiol 89(3):145-154 (2004).
   M. Viuda-Martos et al., Food Safety 28(4):567-576 (2008).
   A. Naeini et al. Journal de Mycologie Médicale 20(3):174-178 (2010).
   N. Boyraz et al., Fitoterapia 76(7-8):661-665 (2005).
   G. R. Vilela et al., J Stored Products Res 45(2):108-111(2009).
   D. Jasso de Rodriguez et al., Ind Crops and Products 25(2):111-116 (2007).
   E. M. Soylu et al., J Appl Microbiol 103(4):1021-1030 (2007).
   E. M. Soylu et al. Int J Food Microbiol 143(3): 183-189 (2010).
   E. L. Souza et al., Int J Food Microbiol 143(3): 183-189 (2005).
   R. Pavikumar Patil et al., Electronic J Environmental, Agricultural and Food Chem, 6(9):2318-2322 (2007).

## Claims

1. An antimicrobial coating composition composed of about 0.1 to about 10 wt.% fungal chitosan component, basis total coating composition, and a crosslinker component providing one or more aromatic aldehydes in an amount of about 0.01 to about 10 wt.%, basis total coating composition, as effective crosslinking agents.

2. The coating composition of claim 1, which
(i) is a gel-like or hydrogel-like composition; and/or
(ii) comprises about 1-3 wt.%, preferably about 2% fungal chitosan component.

3. The coating composition of claim 1 or 2, wherein
(i) the fungal chitosan component is a low molecular weight chitosan having an average molecular weight of less than 200 kDa, preferably having an average molecular weight in the range from about 3 to about 100 kDal, most preferably in the range from about 5 to about 50 kDa; and/or
(ii) is obtained from a fungal organism selected from *Agaricus bisporus, Mucor rouxii, Absidia coerulea, Aspergillus nidulans, Colletotrichum lindemuthianum, Aspergillus niger, Penicillium notatum, Phycomycetes mucor, Pleurotus ostreatus.*

4. The coating composition according to any one of claims 1 to 3, wherein the crosslinker component
(i) comprises an aldehyde of the cinnamon aldehyde-type, preferably comprises a cinnamon aldehyde; and/or
(ii) is a natural oil or extract comprising aromatic aldehydes, preferably is an oil or extract selected from tarragon oil, oregano oil, cinnamon oil and mixtures thereof; and/or
(iii) is present amount of about 0.1 to about 10 wt.%, preferably in an amount of about 1 to about 3 wt.%, basis total coating composition

5. The coating composition of claim 4, wherein the crosslinker component further contains one or more natural oils or extracts without aromatic aldehydes, preferably said aromatic oils or extracts are selected from lemongrass oil, tea tree oil, oregano oil, thyme oil, eucalyptus oil, clove oil, rosemary oil, garlic extract, ginger oil, lavender oil, peppermint oil, basil oil, sage oil, bergamot oil, grapefruit seed extract, onion extract, garlic creeper, zimmu, chamomile, Gmelin's wormwood, hairy beggarticks, caraway, cassia, American wormseed, grapefruit, mandarin, orange, cumin, devil's trumpet, pickling herb, tarbush, fennel and drooping juniper, as well as lavender, malva, spikenard, holy basil, oregano, geranium, boldo, allspice, rosemary, satureja, clove, digoxin, lucky nut, yellow oleander, Madagascar periwinkle, winged prickly ash, and zataria.

6. The coating composition of claim 4 or 5, wherein the crosslinker component comprises a combination of cinnamon oil, lemongrass, bitter almond, and/or vanillin, preferably in an amount of about 0.5 to about 4 wt.%, most preferably in an amount of about 1 to about 3 wt.%, basis total coating composition.

7. The coating composition according to any one of claims 1 to 6, wherein the coating composition further comprises one or more non-ionic detergents, preferably in an amount of about 0.01-3 wt.%, basis total coating composition.

8. The coating composition of claim 7, wherein non-ionic detergent is selected from detergents of the Polysorbate series, including polyoxyethylene (20) sorbitan monolaurate, polyoxyethylene (20) sorbitan monopalmitate, polyoxyethylene (20) sorbitan monostearate and polyoxyethylene (20) sorbitan monooleate; sorbitan fatty acid esters; poly(alkylene-oxide) block copolymers; and oligomeric alkyl-ethylene oxides.

9. The coating composition according to any one of claims 1 to 10, wherein the coating composition further comprises additional nutritionally acceptable components including
(i) one or more emulsifiers, preferably emulsifiers selected from mono- and diglycerides of fatty acids, lecithin, and sucrose esters of fatty acids; and/or
(ii) one or more thickeners, preferably thickeners selected from chitosan, xanthan gum, hydroxypropyl methylcellulose (HPMC), guar gum, carrageenan, pectin, starches, Locust bean gum, agar agar and tara gum; and/or
(iii) one or more buffers, preferably selected from sodium, potassium and calcium salt-containing phosphate-, citrate-, carbonate-, bicarbonate-, acetate- and lactate buffers; and/or
(iv) lubricants preferably polyhydroxy components such as glycerin; and/or
(v) additional antimicrobial agents, preferably selected from algae extracts; and/or
(v) colorants and/or pigments, preferably colorants and pigments selected from titanium dioxide, iron oxides, riboflavin, caramel color, anthocyanins, black tea and carmine.

10. The coating composition according to any one of claims 1 to 9, which is composed of about 1 to 5 wt.%, preferably about 1 to 3 wt.% of a fungal chitosan with an average molecular weight in the range from about 5 to about 50 kDa; about 1 to about 10 wt.%, preferably about 1 to about 3 wt.%, of a the crosslinker component comprising a combination of cinnamon oil, lemongrass, bitter almond, and/or vanillin; about 0.5 to about 10 wt.%, preferably about 0.5 to about 3 wt.%, of Tween^{®}, basis total coating composition, the remainder being water and optional/additional components of the composition.

11. The coating composition according to any one of claims 1 to 10, which has a pH of about 4-5.

12. The coating composition according to any one of claims 1 to 11, which is a printing ink containing a suitable amount of colorant or pigment acceptable for nutritional purposes, preferably colorants and/or pigments as defined in 9(v) above.

13. A method for preparing the antimicrobial coating composition according to any one of claims 1 to 12, said method comprising the following steps:
(a) mixing an aqueous solution of the fungal chitosan component,
(b) mixing an aqueous solution of the crosslinker component, and optionally adding required additional components to the mixture; and
(c) crosslinking and gel formation by combining the mixture of (a) or (b).

14. The method of claim 13, wherein
(i) the pH of the mixtures prior to crosslinking is adjusted to a pH of about 4-5; and/or
(ii) the crosslinking is performed by bringing the combined mixture of (c) into contact with sunlight; and/or
(iii) the crosslinking of the combined mixture of (c) is performed by bringing it to a temperature from 20 to 45 °C, preferably the crosslinking is performed at room temperature.

15. Use of the antimicrobial coating composition according to any one of claims 1 to 13, for coating and/or marking foodstuff, food-containing casings and food packaging.
